# FASCICULE DE BREVET EUROPEEN

(11) **EP 4 262 421 B1**
(45) Date de publication et mention de la délivrance du brevet: **07.05.2025**
(21) Numéro de dépôt: 21844960.1
(22) Date de dépôt: 20.12.2021
(51) Int. Cl.: A21D 13/06, A23G 1/00, A21D 13/80, A23G 1/42, A23G 1/48

(54) **PROCÉDÉ DE PRÉPARATION DE PÉPITES DE CHOCOLAT CONTENANT DES MICROALGUES**
VERFAHREN ZUR HERSTELLUNG VON SCHOKOLADENCHIPS MIT MIKROALGEN
METHOD FOR PREPARING CHOCOLATE CHIPS CONTAINING MICROALGAE

(30) Priorité: 18.12.2020 FR 2013634
(43) Date de publication de la demande: 25.10.2023
(73) Titulaire: Algama, 75002 Paris (FR)
(72) Inventeur: BARRE, Pauline, 78200 Mantes-La-Jolie (FR)
(74) Mandataire: Yes My Patent
(86) Numéro de dépôt international: PCT/EP2021/086884
(87) Numéro de publication internationale: WO 2022/129641

(56) Documents cités:
- EP-A1- 1 118 269
- WO-A1-2011/064722
- WO-A1-2019/007462
- CN-A- 109 221 562

## Description

La présente invention concerne un procédé de fabrication de pépites de chocolats comprenant de la microalgue, lesdites pépites de chocolats et l'utilisation de ces pépites de chocolats. Ledit procédé permet une parfaite incorporation des microalgues grâce à l'application d'une température précise et à l'utilisation d'une étape de surpression au moment du coulage du procédé, permettant de couler des pépites de chocolats de petites tailles. Un agent d'enrobage est également ajouté afin de résoudre le problème de diffusion de la couleur de la microalgue. Ces pépites de chocolats conviennent parfaitement à des utilisations dans des préparations alimentaires, par exemple de cookies, de barres de céréales, de toppings, ou de mueslis.

### Art antérieur

Il existe aujourd'hui des procédés de fabrication qui permettent d'obtenir une préparation de chocolat solide comprenant des microalgues. Et ce, le plus souvent sous forme de tablette ou de barres avec une composition complexe et non vegan.

Des exemples de demandes de brevets de l'art antérieur comprennent :

La famille de brevet WO 2009083629 divulgue une composition énergétique comprenant un mélange de cacao et de spiruline.

La demande WO 2011/064722 divulgue du chocolat comprenant de la spiruline (0,85 - 25% en poids).

La demande US 2019 254328 divulgue un produit alimentaire à base d'algues comprenant notamment du beurre de cacao et une farine à base d'algues.

La demande CN 106578273 divulgue une composition de chocolat comprenant notamment de la spiruline, du *Cordyceps militaris* et des graines de lin.

La demande CN 109221562 divulgue notamment un procédé d'obtention d'un chocolat à base de spiruline.

La famille WO 2019007462 divulgue un complément alimentaire à base de chocolat comprenant notamment 5 à 25 g de spiruline et/ou d'Afa et/ou de chlorelle et/ou de corail moulu.

Cependant, les procédés décrits dans ces documents ont pour inconvénients de ne pas permettre la réalisation de chocolat comprenant des microalgues sous forme solide d'un diamètre inférieur à 10 mm, en raison d'un problème de viscosité lié à la préparation du mélange chocolat/microalgue.

En outre, un second problème technique lié à ces procédés est qu'ils ne permettent pas d'obtenir une pépite de chocolat (d'un diamètre inférieur à 10 mm) aux microalgues dont la couleur des microalgues ne diffusent pas depuis la pépite de chocolat vers le reste de la matrice en cas de cuisson de ladite matrice, ladite cuisson ayant lieu classiquement en pâtisserie à une température minimum de 100°C, durant minimum15min.

Le Demandeur a résolu le problème technique de formation des pépites de chocolat comprenant des microalgues grâce à une incorporation des microalgues à une température précise et à l'utilisation d'une étape de surpression au moment du coulage du procédé permettant de couler des pépites de chocolats de petites tailles. La problématique de diffusion de la couleur a été résolu par l'utilisation d'un agent d'enrobage.

Dans la présente invention 1 bar=100kPa.

Ainsi, selon un premier aspect, l'invention concerne un procédé d'obtention de pépites de chocolat ayant un diamètre compris entre 1 mm et 15 mm, de préférence entre 1 mm et 10 mm, comprenant des microalgues, comprenant les étapes de :
a. Mélanger du chocolat et du beurre de cacao en poudre et maintenir ce mélange à une température de 33°C, selon les étapes suivantes :
   i. Chauffer du chocolat, jusqu'à une température comprise entre 45°C et 50°C ;
   ii. Dès que la température cible de l'étape i. est atteinte, laisser le chocolat obtenu à l'étape i. descendre en température jusqu'à une valeur comprise entre 34°C et 35°C ;
   iii. En maintenant le chocolat obtenu à l'étape ii. entre 34°C et 35°C, le mélanger avec entre 0,5% et 1,5% en masse du produit final de beurre de cacao en poudre, de préférence en agitant à une vitesse comprise entre 30 rpm et 120 rpm pendant une durée comprise entre 30s et 180s ;
   iv. Laisser le mélange obtenu à l'étape iii. descendre à une température exacte de 33°C ;
b. Mélanger au produit obtenu à l'étape a. entre 1% à 20% en masse du produit final de poudre de microalgue en maintenant ledit mélange à une température de 33°C ;
c. Appliquer une pression comprise entre 500 mbar et 2 bar au produit obtenu à l'étape b., tout en le maintenant à 33°C ;
d. Couler le mélange obtenu à l'étape c. pour obtenir des pépites ;
e. Laisser refroidir les pépites obtenues à l'étape d. à une température comprise entre 4°C et 20°C ;
f. Mélanger les pépites obtenues à l'étape e. avec un agent d'enrobage ;
g. Obtention de pépites de chocolats ayant un diamètre compris entre 1 mm et 15 mm, de préférence entre 1 mm et 10 mm, comprenant des microalgues.

Par « chocolat » est entendu l'aliment obtenu à partir de fève de cacao. En particulier selon l'invention, à l'étape a. ledit chocolat est préparé à partir de cacao sec dégraissé et de beurre de cacao. Le chocolat utilisé dans le cadre de l'invention peut comprendre n'importe quel pourcentage de cacao.

Par « beurre de cacao en poudre » est entendu la matière grasse végétale issue de la pression des fèves de cacao pour obtenir la poudre de cacao. La poudre de beurre de cacao utilisée selon l'invention est obtenue par cryogénisation, c'est-à-dire la congélation à très faible température, du beurre de cacao. L'ajout de ce beurre de cacao en poudre permet de faciliter le tempérage du chocolat.

Par microalgues, on entend désigner selon la présente invention les microalgues eucaryotes, qui sont caractérisée par un noyau, comprenant par exemple les chlorophytes, les rhodophytes, les haptophytes, les bacillariophytes, les eustigmatophytes, les eugleno-phytes, les thraustochytriaceae ou encore les dinophytes, lesdits microalgues eucaryotes étant communément dénommées « microalgues », et les microalgues procaryotes, qui ne possèdent pas de noyau, comprenant les cyanophytes, ci-après dénommées spécifiquement « cyanobactéries »

De manière préférée selon l'invention, les microalgues eucaryotes sont choisies parmi les chlorophytes, de préférence parmi Chlorella, Auxenochlorella, Dunaliella, Tetraselmis, Haematococcus, Scenedesmus; les eustigmatophytes, de préférence Nannochloropsis; les euglénophytes, de préférenc, Euglena; les rhodophytes, de préférence Porphyridium; les bacillariophyceae, de préférence Phaeodactylum et Odontella, et les thraustochytriaceae, de préférence Schizochytrium.

De manière préférée, ladite microalgue est choisie parmi la chlorelle et la spiruline.

La chlorelle est une microalgue unicellulaire d'eau douce, riche notamment en chlorophylle. Elle regroupe plusieurs dizaines d'espèces, *chlorella vulgaris* étant la plus utilisée. De préférence, l'espèce de chlorelle utilisée selon l'invention est chlorella vulgaris.

La spiruline est un produit à base de cyanobactéries du genre *Arthrospira,* qui regroupe plusieurs espèces, dont *Arthrospira platensis* est la plus utilisée. De préférence, la spiruline utilisée selon l'invention contient des cyanobactéries de l'espèce *Arthrospira platensis.*

De manière préférée, ladite microalgue est ajoutée sous forme de poudre de microalgues.

Par poudre de microalgue est entendu selon l'invention une poudre comprenant l'ensemble de la microalgue. Cette poudre peut être obtenue par déshydratation de la biomasse, pouvant comprendre notamment des étapes de séchage, d'atomisation, de lyophilisation, etc..

De préférence, l'étape c. est réalisée dans une cuve en surpression.

Par « cuve en surpression », ou « réservoir pressurisé » est entendu un contenant permettant d'appliquer une pression à un liquide qu'il contient. Des exemples de tel réservoirs pressurisés sont les cuves CT SERIES ^{™} fabriquées par SR-TEK. Dans le procédé selon l'invention, la pression appliquée audit mélange est comprise entre 500 mbar et 2 bar, de préférence 1 bar. Tout autre moyen permettant d'appliquer une telle pression au mélange selon l'invention peut être utilisé dans le cadre du procédé selon l'invention.

De préférence, l'étape d. est réalisée via une buse de remplissage de diamètre compris entre 0,1 et 1 cm.

Par « buse de remplissage » est entendu selon l'invention un « conduit » ou « tuyau » permettant l'écoulement d'un fluide. Dans le cadre de l'invention, ladite buse de remplissage permet de déposer le mélange afin de former une pépite. Ladite buse est selon l'invention de préférence de diamètre compris entre 0,1 et 1 cm pour obtenir des pépites.

Par pépite de chocolat est entendu un morceau de chocolat ayant un diamètre compris entre 1 mm et 15 mm, de préférence entre 1 mm et 10 mm.

Par agent d'enrobage est entendu tout ingrédient / additif (vegan) qui enveloppe et protègera la pépite par une fine couche. On peut entendre : les cires (carnauba, candelilla) par exemple, les gommes (gomme arabique, gomme adragante, guar) par exemple, des farines et amidons (caroube, maïs), ingrédients sucrants (sucre, sucre de canne, sirop d'agave, sirop d'érable, sirop de glucose, sucre inverti) ou des associations des ingrédients précités.

De manière préférée, ledit agent d'enrobage est choisi parmi, seul ou en mélange : les cires, de préférence carnauba, candelilla, les gommes, de préférence arabique, adragante, guar, les farines et amidons, de préférence caroube, maïs, les ingrédients sucrants, de préférence sucre, sucre de canne, sirop d'agave, sirop d'érable, sirop de glucose, sucre inverti, ou un mélange de ceux-ci.

L'étape a. de mélange du chocolat et du beurre de cacao est réalisée grâce aux étapes de :
i. Chauffer du chocolat, jusqu'à une température comprise entre 45°C et 50°C ;
ii. Dès que la température cible de l'étape i. est atteinte, laisser le chocolat obtenu à l'étape i. descendre en température jusqu'à une valeur comprise entre 34°C et 35°C ;
iii. En maintenant le chocolat obtenu à l'étape ii. entre 34°C et 35°C, mélanger ledit chocolat obtenu à l'étape ii. avec entre 0,5% et 1,5% en masse du produit final de beurre de cacao en poudre, de préférence en agitant à une vitesse comprise entre 30 rpm et 120 rpm pendant une durée comprise entre 30s et 180s ;
iv. Laisser le mélange obtenu à l'étape iii. descendre à une température exacte de 33°C.

De manière préférée, l'étape b. d'introduction de la poudre de microalgue est réalisée en agitant à une vitesse comprise entre 30 rpm et 180 rpm pendant une durée comprise entre 30 secondes et 5 minutes.

De manière préférée, l'étape d. de coulage est réalisée dans un moule à pépite ou sur une plaque froide.

De manière préférée, l'étape e. de refroidissement des pépites dure entre 2 et 10 heures.

De manière préférée, l'agent d'enrobage à l'étape f. est mélangé dans un ratio entre 200g et 800g de pépites pour 100g d'agent d'enrobage.

De manière préférée, l'étape f. de mélange avec un agent d'enrobage est réalisée à une vitesse comprise entre 15rpm et 100rpm, à une température comprise entre 10°C et 40°C.

De manière préférée, le chocolat à l'étape a. est du cacao sec dégraissé.

Selon un mode de réalisation, l'invention concerne un procédé d'obtention de pépite de chocolat comprenant des microalgues, comprenant les étapes de :
a. Chauffer du chocolat, de préférence un mélange de cacao sec dégraissé et de beurre de cacao, jusqu'à une température comprise entre 45°C et 50°C ;
b. Dès que la température cible de l'étape a. est atteinte, laisser le chocolat obtenu à l'étape a. descendre en température jusqu'à une valeur comprise entre 34°C et 35°C ;
c. En maintenant le chocolat obtenu à l'étape b. à entre 34°C et 35°C, mélanger ledit chocolat obtenu à l'étape b. avec entre 0,5% et 1,5% en masse du produit final de beurre de cacao en poudre, en agitant à une vitesse comprise entre 30 rpm et 120 rpm pendant une durée comprise entre 30s et 180s ;
d. Laisser le mélange obtenu à l'étape c. descendre à une température exacte de 33°C ;
e. Mélanger au produit obtenu à l'étape d. entre 1% à 20% en masse du produit final de poudre de microalgue en agitant à une vitesse comprise entre 30 rpm et 180 rpm pendant une durée comprise entre 30 secondes et 5 minutes, en maintenant ledit mélange à une température de 33°C ;
f. Transférer le mélange obtenu à l'étape e. dans une cuve en surpression, appliquant une pression comprise entre 500 mbar et 2 bar audit mélange, tout en le maintenant à 33°C ;
g. Couler le mélange obtenu à l'étape e. via une buse de remplissage de diamètre compris entre 0,1 et 1 cm dans un moule à pépite ou sur une plaque froide ;
h. Laisser refroidir les pépites obtenues à l'étape g. à une température comprise entre 4°C et 20°C pendant une durée entre 2 et 10 heures ;
i. Mélanger les pépites obtenues à l'étape h. avec un agent d'enrobage, dans un ratio entre 200g et 800g de pépites pour 100g d'agent d'enrobage, à une vitesse comprise entre 15rpm et 100rpm, à une température comprise entre 10°C et 40°C ;
j. Obtention de pépites de chocolats ayant un diamètre compris entre 1 mm et 15 mm. de préférence entre 1 mm et 10 mm, comprenant des microalgues.

En outre, ledit procédé et ledit produit obtenu peuvent comprendre d'autres ingrédients: tous les ingrédients et/ou additifs autorisés selon la DIRECTIVE 2000/36/CE DU PARLEMENT EUROPÉEN ET DU CONSEIL du 23 juin 2000 relative aux produits de cacao et de chocolat destinés à l'alimentation humaine et selon RÈGLEMENT (UE) No 1129/2011 DE LA COMMISSION du 11 novembre 2011 modifiant l'annexe II du règlement (CE) no 1333/2008 du Parlement européen et du Conseil en vue d'y inclure une liste de l'Union des additifs alimentaires.

Les pépites de chocolats obtenues selon le procédé selon l'invention peuvent être utilisées comme n'importe quelles pépites de chocolat.

Selon un deuxième aspect, l'invention concerne également des pépites de ayant un diamètre compris entre 1 mm et 15 mm, de préférence entre 1 mm et 10 mm, obtenues selon le procédé de l'invention, caractérisé en ce qu'elles comprennent :
- 80 à 97,5% de chocolat ;
- 0,5 à 1,5% de beurre de cacao en poudre;
- 1 à 10% de microalgues ;
- 1 à 20% d'agent d'enrobage.

Selon un mode de réalisation de l'invention, lesdites pépites de chocolat comprennent :
- 94% de chocolat ;
- 1% de beurre de cacao en poudre;
- 3% de spiruline ;
- 2% de cire de carnauba.

Selon un mode de réalisation de l'invention, lesdites pépites de chocolat comprennent :
- 91% de chocolat ;
- 1% de beurre de cacao en poudre;
- 5% de chlorelle ;
- 3% de cire de gomme arabique.

Selon un mode de réalisation de l'invention, lesdites pépites de chocolat comprennent :
- 89% de chocolat ;
- 1% de beurre de cacao en poudre;
- 7% de chlorelle jaune ;
- 3% d'une solution d'enrobage comprenant de l'Amidon de maïs et du sucre de canne.

Exemple de composition selon l'invention :

**[Tableau1]**

| Composition 1 (%) | |
|---|---|
| Chocolat | 94% |
| Beurre de cacao | 1% |
| Spiruline | 3% |
| Cire carnauba | 2% |

Exemple de composition selon l'invention

**[Tableau2]**

| Composition 2 (%) | |
|---|---|
| Chocolat | 91% |
| Beurre de cacao | 1% |
| Chlorelle | 5% |
| Gomme arabique | 3% |

Exemple de composition selon l'invention

**[Tableau3]**

| Composition 3 (%) | |
|---|---|
| Chocolat | 89% |
| Beurre de cacao | 1% |
| Chlorelle jaune | 7% |
| Solution d'enrobage (Amidon de maïs + sucre de canne) | 3% |

Selon un troisième aspect, l'invention concerne l'utilisation de pépites de chocolat comprenant des microalgues telles qu'obtenues par le procédé selon l'invention, ou de pépites de chocolat selon l'invention, dans des préparations alimentaires, de préférence dans la préparation de cookies, de brownies, de préparations pâtissières, de barres de céréales, de toppings, de mueslis.

### Exemples

### Exemple 1 : Préparation de pépite de chocolat comprenant des microalgues.

94% en masse totale du produit final de chocolat, de préférence un mélange de cacao sec dégraissé et de beurre de cacao, est chauffé jusqu'à une température de 47°C.

Le chocolat est refroidi jusqu'à une température de 34°C.

Est mélangé le chocolat fondu en agitant à 100rpm pendant 120s, 1% en masse du produit final de beurre de cacao en poudre.

Le mélange ainsi obtenu est descendu à une température exacte de 33°C.

Est mélangé le mélange à 33°C en agitant à 100rpm pendant 3min, 5% en masse du produit final de poudre de microalgue.

La préparation ainsi obtenue est transférée dans une cuve en surpression de 1 bar tout en maintenant le mélange à 33°C.

La préparation est coulée via une buse de remplissage de diamètre 0,5cm dans un moule à pépite.

Les moules contenant la préparation sont laissés à refroidir à une température de 8°C pendant 5h00.

Un agent d'enrobage est mélangé avec les pépites dans un ratio de 100g de pépites pour 10g d'agent d'enrobage à une vitesse de 60rpm pendant une durée de 5min.

Des pépites de chocolats comprenant des microalgues sont donc obtenues.

### Exemple 2 : Préparation de cookies à base de pépites de chocolat selon l'invention

Les pépites ainsi obtenues à l'exemple 1 sont utilisées dans une préparation alimentaire pour cookie.

9,79% de sucre blanc, 9,79% de sucre brun et 16,31% de matières grasses (margarine ou beurre), en masse de la préparation finale de pâte à cookie sont mélangés au Kitchenaid^{™} à vitesse 5 pendant 5minutes. La vitesse 5 du Kitchenaid ^{™} est comprise entre 58 et 220 rpm.

On ajoute 9,46% d'œufs, en masse de la préparation finale de pâte à cookie, et on fouette au Kitchenaid ^{™} à vitesse 5 pendant 3minutes.

D'autre part, on mélange 29,36% de farine, 0,49% de sel et 0,33% de levure chimique, en masse de la préparation finale de pâte à cookie.

Ajoutez les pépites de chocolat comprenant des microalgues, à hauteur de 24,47% en masse de la préparation finale de pâte à cookie.

Mélangez les deux préparations ensemble de manière homogène au Kitchenaid ^{™} à vitesse 5 pendant 5minutes.

Formez des boules de pâtes de 45g.

Cuire dans un four 12min à 180°C.

Les cookies ainsi cuits ne présentent aucun problème visible à l'œil nu de couleur ayant diffusé depuis le chocolat vers le reste du cookie.

## Revendications

1. Procédé d'obtention de pépites de chocolat ayant un diamètre compris entre 1 mm et 15 mm, de préférence entre 1 mm et 10 mm, comprenant des microalgues, comprenant les étapes de :
a. Mélanger du chocolat et du beurre de cacao en poudre et maintenir ce mélange à une température de 33°C, selon les étapes suivantes :
i. Chauffer du chocolat, jusqu'à une température comprise entre 45°C et 50°C ;
ii. Dès que la température cible de l'étape i. est atteinte, laisser le chocolat obtenu à l'étape i. descendre en température jusqu'à une valeur comprise entre 34°C et 35°C ;
iii. En maintenant le chocolat obtenu à l'étape ii. entre 34°C et 35°C, le mélanger avec entre 0,5% et 1,5% en masse du produit final de beurre de cacao en poudre, de préférence en agitant à une vitesse comprise entre 30 rpm et 120 rpm pendant une durée comprise entre 30s et 180s ;
iv. Laisser le mélange obtenu à l'étape iii. descendre à une température exacte de 33°C ;
b. Mélanger au produit obtenu à l'étape a. entre 1% à 10% en masse du produit final de poudre de microalgue en maintenant ledit mélange à une température de 33°C ;
c. Appliquer une pression comprise entre 500 mbar et 2 bar au produit obtenu à l'étape b., tout en le maintenant à 33°C ;
d. Couler le mélange obtenu à l'étape c. pour obtenir des pépites ;
e. Laisser refroidir les pépites obtenues à l'étape d. à une température comprise entre 4°C et 20°C ;
f. Mélanger les pépites obtenues à l'étape e. avec un agent d'enrobage ;
g. Obtention de pépites de chocolats ayant un diamètre compris entre 1 mm et 15 mm, de préférence entre 1 mm et 10 mm, comprenant des microalgues.

2. Procédé d'obtention de pépites de chocolat comprenant des microalgues selon la revendication précédente, **caractérisé en ce que** l'étape b. d'introduction de la poudre de microalgue est réalisée en agitant à une vitesse comprise entre 30 rpm et 180 rpm pendant une durée comprise entre 30 secondes et 5 minutes.

3. Procédé d'obtention de pépites de chocolat comprenant des microalgues selon l'une quelconque des revendications précédentes, **caractérisé en ce que** l'étape c. est réalisée dans une cuve en surpression.

4. Procédé d'obtention de pépites de chocolat comprenant des microalgues selon l'une quelconque des revendications précédentes, **caractérisé en ce que** l'étape d. est réalisée via une buse de remplissage de diamètre compris entre 0,1 et 1 cm.

5. Procédé d'obtention de pépites de chocolat comprenant des microalgues selon l'une quelconque des revendications précédentes, **caractérisé en ce que** l'étape e. de refroidissement des pépites dure entre 2 et 10 heures.

6. Procédé d'obtention de pépites de chocolat comprenant des microalgues selon l'une quelconque des revendications précédentes, **caractérisé en ce que** l'agent d'enrobage à l'étape f. est mélangé dans un ratio entre 200g et 800g de pépites pour 100g d'agent d'enrobage.

7. Procédé d'obtention de pépites de chocolat comprenant des microalgues selon l'une quelconque des revendications précédentes, **caractérisé en ce que** l'étape f. de mélange avec un agent d'enrobage est réalisée à une vitesse comprise entre 15rpm et 100rpm, à une température comprise entre 10°C et 40°C.

8. Procédé d'obtention de pépites selon l'une quelconque des revendications précédentes, **caractérisé en ce que** ledit agent d'enrobage est choisi parmi, seul ou en mélange : les cires, de préférence carnauba, candelilla, les gommes, de préférence arabique, adragante, guar, les farines et amidons, de préférence caroube, maïs, les ingrédients sucrants, de préférence sucre, sucre de canne, sirop d'agave, sirop d'érable, sirop de glucose, sucre inverti, ou un mélange de ceux-ci.

9. Procédé d'obtention de pépites selon l'une quelconque des revendications précédentes, **caractérisé en ce que** ladite microalgue est choisie parmi la chlorelle et la spiruline.

10. Pépites de chocolat ayant un diamètre compris entre 1 mm et 15 mm, de préférence entre 1 mm et 10 mm, obtenues selon le procédé selon l'une quelconque des revendications précédentes, **caractérisé en ce qu'**elles comprennent :
- 80 à 97,5% de chocolat ;
- 0,5 à 1,5% de beurre de cacao en poudre ;
- 1 à 10% de microalgues ;
- 1 à 20% d'agent d'enrobage.

11. Pépites de chocolat selon la revendication précédente, **caractérisé en ce qu'**elles comprennent :
- 94% de chocolat ;
- 1% de beurre de cacao en poudre ;
- 3% de spiruline ;
- 2% de cire de carnauba.

12. Pépites de chocolat selon la revendication 10, **caractérisé en ce qu'**elles comprennent :
- 91% de chocolat ;
- 1% de beurre de cacao en poudre ;
- 5% de chlorelle ;
- 3% de cire de gomme arabique.

13. Utilisation de pépites de chocolat comprenant des microalgues telles qu'obtenues par le procédé selon l'une quelconque des revendications 1 à 9, ou de pépites de chocolat selon les revendications 10 à 12, dans des préparations alimentaires, de préférence dans la préparation de cookies, de brownies, de préparations pâtissières, de barres de céréales, de toppings, ou de mueslis.

## Patentansprüche

1. Verfahren zum Gewinnen von Schokoladenstückchen, die einen Durchmesser zwischen 1 mm und 15 mm aufweisen, vorzugsweise zwischen 1 mm und 10 mm, umfassend Mikroalgen, umfassend die Schritte:
a. Mischen der Schokolade und des Kakaobutterpulvers und Halten dieser Mischung bei einer Temperatur von 33 °C, gemäß den folgenden Schritten:
i. Erhitzen der Schokolade bis auf eine Temperatur zwischen 45 °C und 50 °C;
ii. sobald die Zieltemperatur von Schritt i. erreicht ist, Sinkenlassen der Temperatur der Schokolade, die in Schritt i. gewonnen wird, bis zu einem Wert zwischen 34 °C und 35 °C;
iii. während die Schokolade, die in Schritt ii. gewonnen wird, zwischen 34 °C und 35 °C gehalten wird, Mischen davon mit 0,5 bis 1,5 Massenprozent des Endprodukts aus Kakaobutterpulver, vorzugsweise durch Rühren bei einer Geschwindigkeit zwischen 30 U/min und 120 U/min während einer Dauer zwischen 30 s und 180 s;
iv. Sinkenlassen der Mischung, die in Schritt iii. gewonnen wird, auf eine exakte Temperatur von 33 °C;
b. Mischen zu dem Produkt, das in Schritt a. gewonnen wird, zwischen 1 und 10 % Massenprozent des Endprodukts aus Mikroalgenpulver, wobei die Mischung bei einer Temperatur von 33 °C gehalten wird;
c. Aufbringen eines Drucks zwischen 500 mbar und 2 bar auf das Produkt, das in Schritt b. gewonnen wird, wobei es bei 33 °C gehalten wird;
d. Gießen der Mischung, die in Schritt c. gewonnen wird, zum Gewinnen von Stückchen;
e. Abkühlenlassen der Stückchen, die in Schritt d. gewonnen werden, auf eine Temperatur zwischen 4 °C und 20 °C;
f. Mischen der Stückchen, die in Schritt e. gewonnen werden, mit einem Beschichtungsmittel;
g. Gewinnen von Schokoladenstückchen, die einen Durchmesser zwischen 1 mm und 15 mm aufweisen, vorzugsweise zwischen 1 mm und 10 mm, umfassend Mikroalgen.

2. Verfahren zum Gewinnen von Schokoladenstückchen, umfassend Mikroalgen, nach dem vorstehenden Anspruch, **dadurch gekennzeichnet, dass** Schritt b. zum Einbringen des Mikroalgenpulvers durch Rühren bei einer Geschwindigkeit zwischen 30 U/min und 180 U/min während einer Dauer zwischen 30 Sekunden und 5 Minuten durchgeführt wird.

3. Verfahren zum Gewinnen von Schokoladenstückchen, umfassend Mikroalgen, nach einem der vorstehenden Ansprüche,
**dadurch gekennzeichnet, dass** Schritt c. in einem Überdruckbehälter durchgeführt wird.

4. Verfahren zum Gewinnen von Schokoladenstückchen, umfassend Mikroalgen, nach einem der vorstehenden Ansprüche,
**dadurch gekennzeichnet, dass** Schritt d. über eine Fülldüse mit einem Durchmesser zwischen 0,1 und 1 cm durchgeführt wird.

5. Verfahren zum Gewinnen von Schokoladenstückchen, umfassend Mikroalgen, nach einem der vorstehenden Ansprüche,
**dadurch gekennzeichnet, dass** Schritt e. zum Abkühlen der Stückchen zwischen 2 und 10 Stunden dauert.

6. Verfahren zum Gewinnen von Schokoladenstückchen, umfassend Mikroalgen, nach einem der vorstehenden Ansprüche,
**dadurch gekennzeichnet, dass** das Beschichtungsmittel in Schritt f. in einem Verhältnis zwischen 200 g bis 800 g Stückchen pro 100g Beschichtungsmittel gemischt wird.

7. Verfahren zum Gewinnen von Schokoladenstückchen, umfassend Mikroalgen, nach einem der vorstehenden Ansprüche,
**dadurch gekennzeichnet, dass** Schritt f. zum Mischen mit einem Beschichtungsmittel bei einer Geschwindigkeit zwischen 15 U/min und 100 U/min und einer Temperatur zwischen 10 °C und 40 °C durchgeführt wird.

8. Verfahren zum Gewinnen von Stückchen nach einem der vorstehenden Ansprüche, **dadurch gekennzeichnet, dass** das Beschichtungsmittel ausgewählt ist aus, allein oder in einer Mischung: Wachsen, vorzugsweise Carnauba, Candelilla, Gummis, vorzugsweise Arabikum, Tragant, Guar, Mehlen und Stärken, vorzugsweise Johannisbrot, Mais, Süßungsmitteln, vorzugsweise Zucker, Rohrzucker, Agavendicksaft, Ahornsirup, Glukosesirup, Invertzucker oder einer Mischung davon.

9. Verfahren zum Gewinnen von Stückchen nach einem der vorstehenden Ansprüche, **dadurch gekennzeichnet, dass** die Mikroalgen aus Chlorella und Spirulina ausgewählt sind.

10. Schokoladenstückchen, die einen Durchmesser zwischen 1 mm und 15 mm aufweisen, vorzugsweise zwischen 1 mm und 10 mm, die nach dem Verfahren nach einem der vorstehenden Ansprüche gewonnen werden,
**dadurch gekennzeichnet, dass** sie umfassen:
- 80 bis 97,5 % Schokolade;
- 0,5 bis 1,5 % Kakaobutterpulver;
- 1 bis 10 % Mikroalgen;
- 1 bis 20 % Beschichtungsmittel.

11. Schokoladenstückchen nach dem vorstehenden Anspruch,
**dadurch gekennzeichnet, dass** sie umfassen:
- 94 % Schokolade;
- 1 % Kakaobutterpulver;
- 3 % Spirulina;
- 2 % Carnaubawachs.

12. Schokoladenstückchen nach Anspruch 10,
**dadurch gekennzeichnet, dass** sie umfassen:
- 91 % Schokolade;
- 1 % Kakaobutterpulver;
- 5 % Chlorella;
- 3 % Gummiarabikumwachs.

13. Verwendung von Schokoladenstückchen, umfassend Mikroalgen, wie sie durch das Verfahren nach einem der Ansprüche 1 bis 9 gewonnen werden, oder von Schokoladenstückchen nach den Ansprüchen 10 bis 12 in Lebensmittelzubereitungen, vorzugsweise bei der Herstellung von Keksen, Brownies, Gebäckzubereitungen, Müsliriegeln, Toppings oder Müslis.

## Claims

1. Method for obtaining chocolate chips having a diameter of between 1 mm and 15 mm, preferably between 1 mm and 10 mm, comprising microalgae, the method comprising the steps of:
a. Mixing the chocolate and cocoa butter powder and maintaining this mixture at a temperature of 33°C, according to the following steps:
i. Heating the chocolate to a temperature of between 45°C and 50°C;
ii. Once the target temperature of step i. has been reached, allowing the chocolate obtained in step i. to drop in temperature to between 34°C and 35°C;
iii. While keeping the chocolate obtained in step ii. between 34°C and 35°C, mixing it with between 0.5% and 1.5% by weight of the final cocoa butter powder product, preferably by stirring at a speed of between 30 rpm and 120 rpm for a period of between 30s and 180s;
iv. Allowing the mixture obtained in step iii. to drop in temperature to exactly 33°C;
b. Mixing with the product obtained in step a between 1% and 10% by weight of the final microalgae powder product, maintaining said mixture at a temperature of 33°C;
c. Applying a pressure of between 500 mbar and 2 bar to the product obtained in step b., while maintaining said product at 33°C;
d. Pouring the mixture obtained in step c. to obtain chips;
e. Allowing the chips obtained in step d. to cool to a temperature of between 4°C and 20°C;
f. Mixing the chips obtained in step e. with a coating agent;
g. Obtaining chocolate chips having a diameter of between 1 mm and 15 mm, preferably between 1 mm and 10 mm, comprising microalgae.

2. Method for obtaining chocolate chips comprising microalgae according to the preceding claim, **characterized in that** step b. of introducing the microalgae powder is carried out by stirring at a speed of between 30 rpm and 180 rpm for a period of between 30 seconds and 5 minutes.

3. Method for obtaining chocolate chips comprising microalgae according to any one of the preceding claims, **characterized in that** step c. is carried out in a pressure tank.

4. Method for obtaining chocolate chips comprising microalgae according to any one of the preceding claims, **characterized in that** step d. is carried out via a filling nozzle with a diameter of between 0.1 and 1 cm.

5. Method for obtaining chocolate chips comprising microalgae according to any one of the preceding claims, **characterized in that** step e. of cooling the chips lasts between 2 and 10 hours.

6. Method for obtaining chocolate chips comprising microalgae according to any one of the preceding claims, **characterized in that** the coating agent in step f. is mixed in a ratio between 200g and 800g of chips per 100g of coating agent.

7. Method for obtaining chocolate chips comprising microalgae according to any one of the preceding claims, **characterized in that** step f. of mixing with a coating agent is carried out at a speed of between 15rpm and 100rpm, at a temperature of between 10°C and 40°C.

8. Method for obtaining chips according to any one of the preceding claims,
**characterized in that** said coating agent is selected from, alone or in a mixture: waxes, preferably carnauba, candelilla, gums, preferably gum arabic, tragacanth gum, guar gum, flours and starches, preferably carob, corn, sweetening ingredients, preferably sugar, cane sugar, agave syrup, maple syrup, glucose syrup, invert sugar, or a mixture thereof.

9. Method for obtaining chips according to any one of the preceding claims,
**characterized in that** said microalgae is selected from chlorella and spirulina.

10. Chocolate chips having a diameter of between 1 mm and 15 mm, preferably between 1 mm and 10 mm, obtained according to the method of any one of the preceding claims, **characterized in that** the chips comprise:
- 80 to 97.5% chocolate;
- 0.5 to 1.5% cocoa butter powder;
- 1 to 10% microalgae;
- 1 to 20% coating agent.

11. Chocolate chips according to the preceding claim, **characterized in that** the chips comprise:
- 94% chocolate;
- 1% cocoa butter powder;
- 3% spirulina;
- 2% carnauba wax.

12. Chocolate chips according to claim 10, **characterized in that** the chips comprise:
- 91% chocolate;
- 1% cocoa butter powder;
- 5% chlorella;
- 3% gum arabic wax.

13. Use of chocolate chips comprising microalgae as obtained by the method according to any one of claims 1 to 9, or of chocolate chips according to claims 10 to 12, in food preparations, preferably in the preparation of cookies, brownies, pastry mixes, cereal bars, toppings, or mueslis.
